# EUROPÄISCHE PATENTSCHRIFT

(11) **EP 1 230 105 B1**
(45) Veröffentlichungstag und Bekanntmachung des Hinweises auf die Patenterteilung: **18.02.2004**
(21) Anmeldenummer: 00974495.4
(22) Anmeldetag: 01.11.2000
(51) Int. Cl.: B60R 16/02

(54) **KRAFTFAHRZEUG-BORDNETZ**
MOTOR VEHICLE ELECTRICAL SYSTEM
RESEAU DE BORD DE VEHICULE

(30) Priorität: 05.11.1999 DE 19953534
(43) Veröffentlichungstag der Anmeldung: 14.08.2002
(73) Patentinhaber: Volkswagen Aktiengesellschaft, 38436 Wolfsburg (DE)
(72) Erfinder: MÜLLER, Uwe, 38547 Calberlah (DE); DIERKER, Uwe, 38550 Isenbüttel (DE)
(74) Vertreter: Effert, Bressel und Kollegen
(86) Internationale Anmeldenummer: PCT/EP2000/010741
(87) Internationale Veröffentlichungsnummer: WO 2001/032473

(56) Entgegenhaltungen:
- EP-A- 0 337 155
- DE-A- 3 007 941
- DE-A- 4 028 242
- DE-C- 19 739 410
- US-A- 5 455 463

## Beschreibung

Die Erfindung betrifft ein Kraftfahrzeug- Bordnetz gemäß dem Oberbegriff des Patentanspruchs 1, der aus dem Dokument DE-A-40 28 242 bekannt ist.

Derartige Kraftfahrzeug- Bordnetze umfassen mindestens einen Generator, mindestens eine Batterie, einen Starter und elektrische Verbraucher, wobei der Generator mit der Batterie verbunden ist. Über die Batterie werden dann die elektrischen Verbraucher wie beispielsweise Steuergeräte, Leuchten, Heizverbraucher oder Audio-Video-Geräte versorgt. Die Verbindung zwischen Generator und Batterie dient dabei der Glättung der welligen Generatorausgangsspannung.

In modernen Kraftfahrzeugen mit einer Vielzahl von elektrischen Verbrauchern reicht eine einzige Batterie nicht mehr aus, so daß zunehmend Zwei-Batteriensysteme zur Anwendung kommen. Dabei dient eine Batterie, die Starterbatterie zur Spannungsversorgung im Startfall. Diese versorgt einerseits den Starter und andererseits die startrelevanten Verbraucher mit elektrischer Spannung. Die Spannungsversorgung im Betriebsfall mit aktivem oder inaktivem Generator für die anderen elektrischen Verbraucher im Bordnetz liefert die Bordnetzbatterie. Die konkrete Verschaltung zwischen Starterbatterie und Bordnetzbatterie kann dabei sehr unterschiedlich sein. Gemeinsam ist den meisten Bordnetzen, daß Starterbatterie und Bordnetzbatterie parallel geschaltet sind, wobei zwischen den beiden Pluspolen ein Schalter angeordnet ist, mittels dessen die Verbindung hergestellt bzw. unterbrochen wird. Die Ansteuerung des Schalters erfolgt dabei in Abhängigkeit vom Bordnetzzustand. Hierzu wird die Verbindung stets im Ruhezustand und in normalen Startphasen aufgetrennt, damit die Starterbatterie nicht durch eine entladene Bordnetzbatterie belastet wird. Des weiteren wird die Verbindung im Betrieb mit aktivem Generator aufgetrennt, wenn ansonsten die Starterbatterie durch das Bordnetz und die Bordnetzbatterie entladen werden würde. Ansonsten ist der Schalter geschlossen, um die Starterbatterie vom Generator über die Bordnetzbatterie zu laden. Aufgrund des begrenzten Bauraums ist es nicht immer gewährleistet, daß die Starterbatterie, die Bordnetzbatterie und der Generator in unmittelbarer Nähe zueinander im Kraftfahrzeug angeordnet werden können. Dies führt dann zu einem erhöhten Verkabelungsaufwand. Neben den erhöhten Kosten für die Kabel fallen hier insbesondere die Vorhaltungen für die Kabeldurchführungen ins Gewicht.

Der Erfindung liegt daher das technische Problem zugrunde, ein Kraftfahrzeug-Bordnetz zu schaffen, bei dem der Verkabelungsaufwand reduziert wird.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Besonders vorteilhaft wirkt sich das neue Bordnetz in Zwei-Batteriensystemen aus. Sind beispielsweise der Generator und die Starterbatterie im vorderen Motorraum und die Bordnetzbatterie im Kofferraum angeordnet, so müßte im herkömmlichen Bordnetz für einen Verbraucher im vorderen Bereich ein Kabel durch das ganze Kraftfahrzeug gelegt werden. Ist dieser Bordnetzverbraucher hingegen spannungsschwankungsunempfindlich so genügt nach dem neuen Bordnetz-Verkabelungskonzept eine kurze direkte Verkabelung mit dem Generator. Dieses Beispiel macht jedoch auch verständlich, daß es nicht sinnvoll sein muß, alle denkbaren spannungsschwankungsunempfindlichen Verbraucher direkt mit dem Generator zu verbinden, sondern stets deren Einbauart zu berücksichtigen ist. Dadurch kann beispielsweise auch die Auswahl der Verbraucher typenspezifisch unterschiedlich sein.

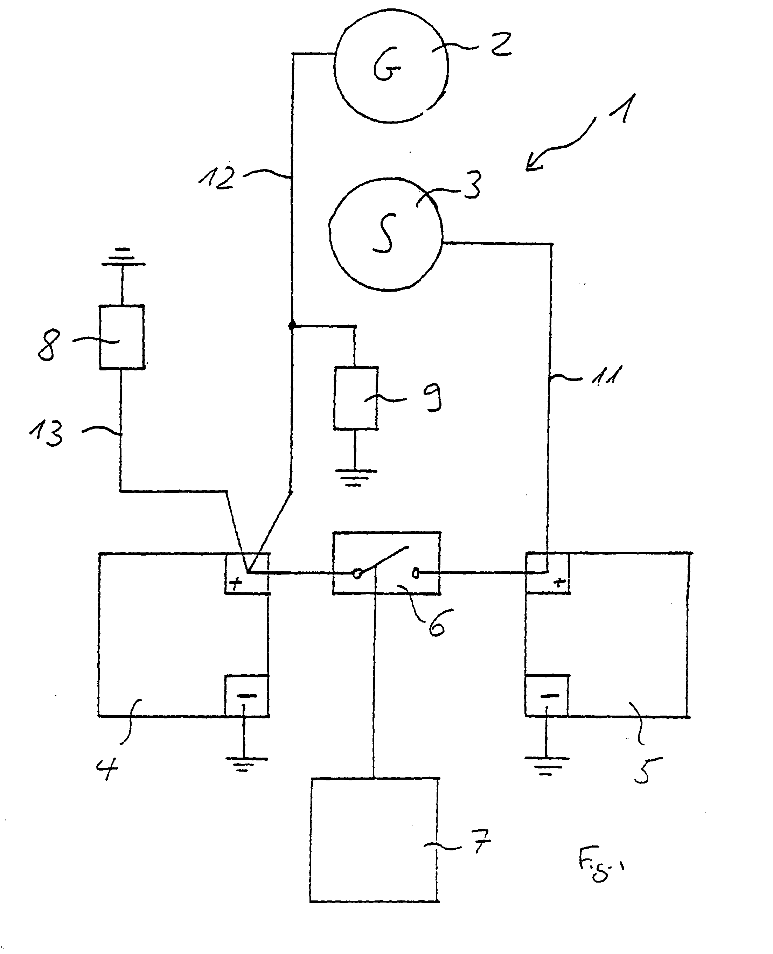

Die Erfindung wird nachfolgend anhand eines bevorzugten Ausführungsbeispieles näher erläutert. Die einzige Figur zeigt ein schematisches Blockschaltbild eines Zwei- Batteriensystems.

Das Kraftfahrzeug- Bordnetz 1 umfaßt einen Generator 2, einen Starter 3, eine Bordnetzbatterie 4, eine Starterbatterie 5, einen Schalter 6, ein Bordnetzsteuergerät 7, spannungsschwankungsempfindliche Bordnetzverbraucher 8 und spannungsschwankungsunempfindliche Bordnetzverbraucher 9. Die Bordnetzbatterie 4 und die Starterbatterie 5 sind über den Schalter 6 parallel geschaltet. Der Schalter 6 ist beispielsweise als Relais oder Leistungshalbleiter geschaltet. Der Schalter 6 ist beispielsweise als Relais oder Leistungshalbleiter ausgebildet und wird von einem Bordnetzsteuergerät 7 in Abhängigkeit vom Bordnetzzustand geschaltet. Der Starter 3 ist über eine Starterleitung 11 mit dem Pluspol der Starterbatterie 5 verbunden. Ebenso können die startrelevanten Verbraucher, die hier nicht dargestellt sind, der Starterbatterie 5 zugeordnet sein. Der Generator 2 ist über eine Generatorleitung 12 über eine nicht dargestellte Sicherung mit dem Pluspol der Bordnetzbatterie 4 verbunden. Die spannungsschwankungsunempfindlichen Bordnetzverbraucher 9 sind direkt über einen Abgriff an der Generatorleitung 12 mit dem Generator 2 verbunden, wohingegen die spannungsschwankungsempfindlichen Bordnetzverbraucher 8 über eine Bordnetzleitung 13 mit dem Pluspol der Bordnetzbatterie 4 verbunden sind.

Im laufenden Betrieb, d.h. bei aktivem erregten Generator 2, erzeugt dieser eine wellige Gleichspannung, die die Bordnetzbatterie 4 kontinuierlich lädt. Diese wellige Gleichspannung wird durch die Bordnetzbatterie 4 geglättet, so daß die spannungsschwankungsempfindlichen Bordnetzverbraucher 8 über die Bordnetzbatterie 4 mit einer geglätteten Spannung versorgt werden. Die spannungsschwankungsunempfindlichen Bordnetzverbraucher 9 sind derart ausgebildet, daß diese in ihrer Betriebsweise nicht durch die Welligkeit der Generatorausgangsspannung beeinträchtigt sind. Diese Bordnetzverbraucher 9 sind beispielsweise die Sekundärluftpumpe im Abgasstrang oder elektrische Heizverbraucher. Durch die direkte Anbindung dieser Bordnetzverbraucher 9 an die Generatorleitung 12 entfällt deren ansonsten notwendige separate Verkabelung vom Pulspol der Bordnetzbatterie 4.

## Patentansprüche

1. Kraftfahrzeug-Bordnetz (1 ), umfassend mindestens einen Generator (2), mindestens eine Starterbatterie (5) und eine Bordnetzbatterie (4), einen Starter (3) und elektrische Verbraucher (8, 9), wobei der Generator (2) mit der Bordnetzbatterie (4) verbunden ist und zwischen der Bordnetzbatterie (4) und der Starterbatterie (5) ein Schalter (6) angeordnet ist, mittels dessen die Bordnetzbatterie (4) und die Starterbatterie (5) parallel schaltbar sind,
**dadurch gekennzeichnet, dass**
die elektrischen Verbraucher in startrelevante Verbraucher, spannungsschwankungsempfindliche und -unempfindliche Bordnetzverbraucher unterteilt sind, wobei die startrelevanten Verbraucher der Starterbatterie (5) und/oder der Bordnetzbatterie (4) zugeordnet sind, die spannungsschwankungsempfindlichen Bordnetz-Verbraucher (8) mit der Bordnetzbatterie (4) über eine Bordnetzleitung (13) verbunden sind und die spannungsschwankungsunempfindlichen Bordnetz-Verbraucher (9) direkt über einen Abgriff an der Generatorleitung (12) mit dem Generator (2) verbunden sind.

2. Kraftfahrzeug-Bordnetz nach Anspruch 1, **dadurch gekennzeichnet, dass** die spannungsschwankungsunempfindlichen Bordnetzverbraucher (9) eine Sekundärluftpumpe in Abgasstrang und/oder elektrische Heizelemente sind.

3. Kraftfahrzeug-Bordnetz nach Anspruch 1 oder 2, **dadurch gekennzeichnet, dass** der Generator (2) und die Starterbatterie (5) im vorderen Motorraum und die Bordnetzbatterie (4) im Kofferraum angeordnet sind.

## Claims

1. Motor vehicle on-board electrical system (1) comprising at least one generator (2), at least one starter battery (5) and an on-board electrical system battery (4), a starter (3) and electrical loads (8, 9), the generator (2) being connected to the on-board electrical system battery (4) and a switch (6), by means of which the on-board electrical system battery (4) and the starter battery (5) can be connected in parallel, being arranged between the on-board electrical system battery (4) and the starter battery (5), **characterized in that** the electrical loads are divided into starting-related loads and on-board electrical system loads which are sensitive to voltage fluctuations and ones which are insensitive to voltage fluctuations, the starting-related loads being assigned to the starter battery (5) and/or to the on-board electrical system battery (4), the on-board electrical system loads (8) which are sensitive to voltage fluctuations being connected to the on-board electrical system battery (4) via an on-board electrical system line (13), and the on-board electrical system loads (9) which are insensitive to voltage fluctuations being connected directly to the generator (2) via a tap on the generator line (12).

2. Motor vehicle on-board electrical system according to Claim 1, **characterized in that** the on-board electrical system loads (9) which are insensitive to voltage fluctuations are a secondary air pump in the exhaust section and/or electric heating elements.

3. Motor vehicle on-board electrical system according to Claim 1 or 2, **characterized in that** the generator (2) and the starter battery (5) are arranged in the front engine compartment and the on-board electrical system battery (4) is arranged in the boot space.

## Revendications

1. Réseau de bord pour véhicule (1) comprenant au moins un alternateur (2), au moins une batterie de démarrage (5) et une batterie de réseau de bord (4), un démarreur (3) et des appareillages électriques (8, 9), l'alternateur (2) étant relié à la batterie de réseau de bord (4) et entre la batterie de réseau de bord (4) et la batterie de démarrage (5) est disposé un commutateur (6) à l'aide duquel la batterie de réseau de bord (4) et la batterie de démarrage (5) peuvent être branchées en parallèle, **caractérisé en ce que** les appareillages électriques sont divisés en appareillages intervenant dans le démarrage, en appareillages du réseau de bord (8) sensibles et en appareillages du réseau de bord insensibles aux variations de tension, les appareillages intervenant dans le démarrage étant affectés à la batterie de démarrage (5) et/ou à la batterie de réseau de bord (4), les appareillages du réseau de bord sensibles aux variations de tension (8) étant reliés à la batterie de réseau de bord (4) par le biais d'un câble de réseau de bord (13) et les appareillages du réseau de bord insensibles aux variations de tension (9) étant. reliés directement à l'alternateur (2) par le biais d'une prise sur le câble de l'alternateur (12).

2. Réseau de bord pour véhicule selon la revendication 1, **caractérisé en ce que** les appareillages du réseau de bord insensibles aux variations de tension (9) sont une pompe à air secondaire dans le trajet des gaz d'échappement et/ou des éléments chauffants électriques.

3. Réseau de bord pour véhicule selon la revendication 1 ou 2, **caractérisé en ce que** l'alternateur (2) et la batterie de démarrage (5) sont disposés dans le compartiment moteur avant et la batterie du réseau de bord (4) dans le coffre.
